(19) Europäisches Patentamt
European Patent Office
Office européen des brevets

(11) **EP 3 896 202 B1**

(12) **EUROPEAN PATENT SPECIFICATION**

(45) Date of publication and mention
of the grant of the patent:
**28.02.2024 Bulletin 2024/09**

(21) Application number: **19896105.4**

(22) Date of filing: **29.10.2019**

(51) International Patent Classification (IPC):
**D03D 1/02** *(2006.01)* **B60R 21/16** *(2006.01)*
**B60R 21/235** *(2006.01)* **D03D 5/00** *(2006.01)*
**D03D 13/00** *(2006.01)*

(52) Cooperative Patent Classification (CPC):
**D03D 15/283; B60R 21/235; D03D 1/02;**
**D03D 5/00; D03D 13/00; D03D 15/43;**
B60R 2021/23509; B60R 2021/23514;
B60R 2021/23542; D10B 2505/124

(86) International application number:
**PCT/JP2019/042427**

(87) International publication number:
**WO 2020/121670 (18.06.2020 Gazette 2020/25)**

(54) **AIRBAG FABRIC AND METHOD FOR MANUFACTURING AIRBAG FABRIC**

AIRBAG-GEWEBE UND VERFAHREN ZUR HERSTELLUNG VON AIRBAG-GEWEBE

TISSU DE COUSSIN DE SÉCURITÉ GONFLABLE ET PROCÉDÉ DE FABRICATION DE TISSU DE COUSSIN DE SÉCURITÉ GONFLABLE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **14.12.2018 JP 2018234321**

(43) Date of publication of application:
**20.10.2021 Bulletin 2021/42**

(73) Proprietor: **Toray Industries, Inc.**
**Tokyo 103-8666 (JP)**

(72) Inventors:
• **YAMADA, Riku**
**Otsu-shi, Shiga 520-2141 (JP)**
• **KAWASAKI, Naoki**
**Otsu-shi, Shiga 520-2141 (JP)**
• **TANAKA, Nobuaki**
**Otsu-shi, Shiga 520-2141 (JP)**

(74) Representative: **Mewburn Ellis LLP**
**Aurora Building**
**Counterslip**
**Bristol BS1 6BX (GB)**

(56) References cited:
WO-A1-2014/051049    JP-A- H09 302 549
JP-A- 2002 069 790    JP-A- 2005 179 806
JP-A- 2007 138 356    US-A1- 2009 194 188

**Description**

TECHNICAL FIELD

The present invention relates to a woven fabric for airbag and a producing method of the woven fabric for airbag. More specifically, the present invention relates to a woven fabric that effectively suppresses recession of a weaving shed which occurs in a vicinity of a selvage portion and occurrence of selvedge waving when weaving a high-density woven fabric, particularly a woven fabric for airbag, and a producing method thereof.

BACKGROUND ART

An automobile is equipped with an airbag to ensure safety of an occupant. In the event of automobile collision, the airbag is configured to activate a sensor in response to impact of the collision and generate a high-temperature and high-pressure gas inside the airbag, whereby instantly inflating the airbag to allow for protection of the occupant's face and forehead at the time of the collision.

An airbag is generally made by producing a base fabric (so-called a coated fabric) in which resin such as silicone is applied or laminated on a cloth made of a plain woven fabric using a synthetic fiber of 150 to 600 dtex in order to improve properties such as heat resistance, flame retardancy, and air barrier property, cutting it, and sewing it into a bag body.

In addition, there is a so-called non-coated fabric that is used with a reducing air permeability of the cloth by weaving a synthetic fiber filament yarn such as a polyamide fiber at a high density without applying resin.

Here, high strength and low air permeability are required for the woven fabric for airbag in the event of automobile collision in order to instantly inflate the airbag and protect the occupant's face, forehead, etc. at the time of the collision.

For this purpose, there has been a growing demand for the woven fabric for airbag to use a higher-strength yarn and have a high density as compared to an ordinary woven fabric for cloth.

Generally, in weaving a woven fabric for airbag, in a case of, for example, a plain-woven texture having warp yarn and weft yarn of 485 dtex and a woven fabric density of 55 pieces of yarn per inch (2.54 cm) in both warp yarn and weft yarn, etc., the higher the weft yarn density becomes, the larger an amount of movement of a weaving shed to the feeding side of warp yarn rather than the most advanced position of a reed becomes, due to a woven fabric design. Thereby, inconveniences during weaving easily occur as described in the following (a) to (d).

(a) During beating, a woven fabric in the vicinity of the weaving shed causes a bumping phenomenon, making it difficult to obtain a woven fabric having a desired weft yarn density.

(b) After beating weft yarn, weft yarn is cut by a cutter at each of left and right ends, but at that time, the ends of the cut weft yarn are not gripped and become freed, and weft yarn crimp at both selvage ends of the woven fabric become large, thereby conversely making warp yarn crimp small. Thus, warp yarn tension in both selvage portions are reduced. Therefore, a gripping force of weft yarn by warp yarn is reduced, and weaving sheds in both selvage portions recede. As a result, fluffing due to loosening of warp yarn, etc., at the selvage portion is induced, and a stable weaving becomes impossible.

(c) If a rotation speed of a loom is accelerated, the phenomenon that the weaving shed at the selvage portion end recedes becomes further remarkable. Loosening of warp yarn at the selvage portion of the woven fabric causes a difference in cloth length between the selvage portion and a central part, which causes flare (also referred to as "selvage waving") in which the selvage end becomes wavy. The base fabric for airbag is cut, sewn, and made into a bag body, but a cutting pattern for maximally and effectively utilize the base fabric for airbag is designed such that, usually, the selvage end or even the vicinity thereof are used. However, ends of a cut piece easily unravel, and thus poor cutting easily occurs if flare occurs in the vicinity of the selvage end. As a result, a desired accurate shape as an airbag cannot be obtained, and also a necessary function is not obtained.

(d) Flare in a gray fabric not only compromises process passableness at the time of rolling and in the subsequent scouring and setting steps but also becomes a cause of occurrence of wrinkles. Moreover, when resin is coated, flare not only compromises process passableness in the coating step but also causes occurrence of unevenness in an amount of application of the coating resin and wrinkles.

As various attempts to prevent the above-described inconveniences (a) to (d), a method of arranging binding yarn and additional yarn having a fineness of 33 dtex or less in a selvage weave portion and selvage-tightening yarn having a total fineness of 80% or more based on a total fineness of ground yarn in a woven fabric for airbag made of synthetic fibers has been proposed (Patent Document 1). Moreover, a method of inserting a modified cross-section yarn or a spun yarn into binding yarn and a method of making a warp yarn denier in a selvage portion thinner than a warp denier in a ground body portion have been proposed (Patent Documents 2 to 4). Patent Document 5 discloses a fabric comprising first and second warp threads and first and second weft threads characterized in that the first warp threads and the first weft threads form a basic fabric while the second warp threads, along with the second weft threads, form a covering fabric that adjoins the basic fabric, the second warp threads also being interwoven with the first weft threads.

PRIOR ART DOCUMENT

Patent Document

Patent Document 1: JP 2014-051049 A
Patent Document 2: JP 2001-355143 A
Patent Document 3: JP 2000-064148 A
Patent Document 4: JP H10-236253 A
Patent Document 5: US 2009/0194188 A1

SUMMARY OF THE INVENTION

However, when weaving a high-density woven fabric in pursuit of even higher strength and lower air permeability, in a case of, for example, a plain-woven texture having warp yarn and weft yarn of 470 dtex and a woven fabric density of 57 pieces of yarn per inch (2.54 cm) in both warp yarn and weft yarn, etc., in such a method as proposed in Patent Document 1, weft yarn cannot be sufficiently tightened in a selvage portion, which causes a decline in warp yarn tension in the selvage portion, leading to problems of occurrence of fluffing of warp yarn, an increased number of times of stop of a weaving machine, and deterioration of flare. Moreover, in the methods proposed in Patent Documents 2 to 4, since yarn having a shape different from that of a ground portion or yarn having a small fineness is used for a selvage portion, there is a problem that yarn breakage and fluffing easily occur when a woven fabric is woven at a high speed.

The present invention has been made in view of such conventional problems, and it is an object of the present invention to provide a high-quality woven fabric for airbag capable of effectively suppressing recession of weaving sheds in both selvage portions that occurs during weaving and occurrence of flare, suppressing occurrence of wrinkles at the ends when a roll of cloth of a great length is used, and suppressing position shift at the time of cutting, and a producing method of the woven fabric for airbag.

The woven fabric for airbag of the present invention that solves the above-described problems is a woven fabric for airbag made of synthetic fibers, wherein at least one selvage portion of the woven fabric has weaving yarn YA and weaving yarn YB arranged in a warp yarn direction each having a different crimp ratio, wherein the weaving yarn YA and the weaving yarn YB are repeatedly arranged, wherein the crimp ratio CA of the weaving yarn YA and the crimp ratio CB of the weaving yarn YB satisfy a relation of $CA \geqq CB \times 1.2$, and wherein the crimp ratio CB is smaller than the crimp ratio CA. At least one of the weaving yarn YA and the weaving yarn YB is made of the same synthetic fiber as weaving yarn YC arranged in the warp yarn direction constituting a ground portion of the woven fabric, and a crimp ratio CC of the weaving yarn YC satisfies a relation of $CA > CC > CB$.

Moreover, the producing method of a woven fabric for airbag of the present invention that solves the above-described problems is a producing method of a woven fabric for airbag for producing the above-described woven fabric for airbag, the method comprising repeatedly arranging weaving yarn YA and weaving yarn YB in at least one selvage portion of the woven fabric and adjusting a tension TA applied to the weaving yarn YA and a tension TB applied to the weaving yarn YB to have a relation of $TB \geqq TA \times 1.2$ for weaving. The woven fabric further has weaving yarn YC arranged in a warp yarn direction constituting a ground portion, wherein a tension TC applied to the weaving yarn YC satisfies a relation of $TB > TC > TA$.

BRIEF DESCRIPTION OF THE DRAWINGS

FIG. 1 is a schematic view for explaining a structure of weaving yarn which constitute a ground portion of the woven fabric according to one embodiment of the present invention.
FIG. 2 is a schematic view for explaining a structure of weaving yarn which constitute a selvage portion of the woven fabric according to one embodiment of the present invention.

EMBODIMENT FOR CARRYING OUT THE INVENTION

[Woven fabric for airbag]

The woven fabric for airbag according to one embodiment of the present invention (hereinafter, also simply referred to as a woven fabric) is made of a multifilament of synthetic fibers (hereinafter, also referred to as a synthetic fiber yarn) at its ground portion. Here, the ground portion refers to a portion of a body of the woven fabric other than the selvage portion. As a material of the synthetic fiber, for example, a polyamide-based fiber, a polyester-based fiber, an aramid-based fiber, a rayon-based fiber, a polysulfone-based fiber, an ultrahigh molecular weight polyethylene fiber, or the like can be used.

Among them, as the material of the synthetic fiber, a polyamide-based fiber or a polyester-based fiber having excellent mass productivity and economy is preferable.

Examples of the polyamide-based fiber include, for example, a fiber made of nylon 6, nylon 66, nylon 12, nylon 46, a copolymerized polyamide of nylon 6 and nylon 66, a copolymerized polyamide obtained by copolymerizing nylon 6 with polyalkylene glycol, dicarboxylic acid, or amine, etc., and the like. As the polyamide-based fiber, nylon 6 fiber and nylon 66 fiber are particularly excellent in strength and preferable.

Examples of the polyester-based fiber include, for example, a fiber made of polyethylene terephthalate, polybutylene terephthalate, and the like. The polyester-based fiber may be a fiber made of a copolymerized polyester obtained by copolymerizing polyethylene terephthalate or polybutylene terephthalate with an isophthalic acid, a 5-sodium sulfoisophthalic acid, or an aliphatic dicarboxylic acid such as an adipic acid, as an acid component.

Moreover, these synthetic fibers may contain an additive such as a heat stabilizer, an antioxidant, a light stabilizer, a smoothing agent, an antistatic agent, a plasticizer, a thickener, a pigment, a flame retardant, and the like, in order to improve productivity in spinning, stretching, and processing steps or improve characteristics. Furthermore, as for a sectional shape of a single fiber of the synthetic fibers, a single fiber having a circular cross section as well as a flat cross section can be used.

It is preferable for the fabric for the airbag produced in the present embodiment that, normally, the same synthetic fiber yarn are used as warp yarn and weft yarn. "The same synthetic fiber yarn are used as warp yarn and weft yarn" means that warp yarn and weft yarn are both made of the same kind of polymers, have the same single fiber fineness, and have the same total fineness. The same kind of polymers are polymers having main repetition units in common such as Nylon 66 polymers and polyethylene terephthalates. For example, a combination of a homopolymer and a copolymerized polymer is also preferably used as the same kind of polymers in the present embodiment. Furthermore, adoption of a combination in which a presence/absence of a copolymerization component and, if copolymerization is performed, a type and an amount of a copolymerization component are the same will eliminate a need to distinguish warp yarn and weft yarn, and is therefore preferable in terms of production control.

As for the synthetic fiber yarn used as ground yarn of the woven fabric, it is preferable to use a synthetic fiber filament whose single fiber fineness is 1 to 7 dtex. Having a single fiber fineness of 7 dtex or less brings about smaller spaces formed between single fibers in the woven fabric and even further improves a packing effect of the fiber so as to allow an amount of air permeation to be reduced, and therefore is preferable. Moreover, if the single fiber fineness is lower, effects of decreasing rigidity of the synthetic fiber filament and also improving flexibility of the woven fabric can be obtained, so that a packaging property of the airbag improves, which is preferable.

The total fineness of the synthetic fiber yarn used as ground yarn of the woven fabric is preferably 150 to 600 dtex. By setting the total fineness of the synthetic fiber yarn for use as ground yarn to 150 dtex or more, the strength of the woven fabric can be maintained. Moreover, by setting the total fineness to 600 dtex or less, the compactness at the time of packaging and the low air permeability can be maintained. The total fineness is more preferably 200 to 550 dtex, further preferably 250 to 500 dtex. Having a total fineness within these ranges improves strength, edgecomb resistance, low air permeation, flexibility and compact packaging property of the woven fabric with a good balance.

A tenacity of the synthetic fiber constituting the woven fabric of the present embodiment, particularly the synthetic fiber yarn used as ground yarn, is preferably 8.0 to 9.0 cN/dtex, more preferably, 8.3 to 8.7 cN/dtex, for both warp yarn and weft yarn, for the purpose of satisfying mechanical characteristics required as an airbag and in terms of spinning operation.

A structure of the woven fabric is not particularly limited provided that the woven fabric produced in the present embodiment is made up of warp yarn and weft yarn that are made of the same synthetic fiber yarn as described above. By way of an example, the woven fabric structure includes plain weave, twill weave, satin weave, and variable weave thereof, multiaxial weave, and the like. Among them, the woven fabric structure is particularly preferably plain weave from the viewpoints that it is excellent in mechanical properties and is thin which are particularly required when used for airbag. A weaving density can vary depending on whether the woven fabric is subjected to resin processing or not, depending on a fineness of weaving yarn, and the like. A cover factor is preferably 1900 to 2500 in view of achieving both a low air permeability and a high edgecomb resistance. Generally, when the cover factor is within the above-described range, the mechanical properties (tenacity, tear strength, etc.) required for the airbag are appropriately maintained, an appropriate basis weight is easily obtained, and the woven fabric is less likely to become coarse and hard. When the cover factor is 1900 or more, the basis weight of the base fabric becomes not too small, and yarn edgecomb is less likely to occur. On the other hand, when the cover factor is 2500 or less, the basis weight of the base fabric does not become too large, and the woven fabric is less likely to become coarse and hard. In general, when the cover factor exceeds 1900, recession of the weaving shed in the selvage portion, which becomes a problem during weaving, becomes large. Moreover, flare becomes remarkable. The present embodiment can be effectively adopted even in a woven fabric having a cover factor of less than 1900 or more than 2500 and in production thereof, and the above-described effect is easily exhibited particularly when the woven fabric has a cover factor of 1900 to 2500. Besides, in the present embodiment, the cover factor (CF) is a value calculated from a total fineness and a weaving density of yarn used for warp or weft yarn and is defined by the following equation (1). Besides, in the equation (1), Dw is a total fineness of warp yarn (dtex), Nw is a density of warp yarn (yarn/2.54 cm), Df is a total fineness of weft yarn (dtex), and Nf is a density of weft yarn (yarn/2.54 cm).

$$(1)\ CF = (Dw \times 0.9)^{1/2} \times Nw + (Df \times 0.9)^{1/2} \times Nf$$

Generally, in weaving a woven fabric for airbag, binding yarn or additional yarn are used at a selvage portion. Furthermore, in order to reduce selvage waving, selvage-tightening yarn may be used between additional yarn and warp yarn.

"Binding yarn" are also referred to as leno and form a selvage by tightening weft yarn at the outermost part in the selvage part of the woven fabric with multiple yarn being bound each other to prevent selvage unraveling. When forming a selvage, a planetary gear is generally used, and further preferably a planetary gear twisting method is used. As a method of forming a selvage, there may be other methods as well. A material, a type, and a fineness of binding yarn are appropriately selected according to a type and a weaving density of ground yarn. As for the number of yarn used, it is preferable to use two or more pieces of yarn for each of both ends, preferably two pieces of yarn for each. As binding yarn, a monofilament having an excellent selvage-tightening performance is generally used. A multifilament may be used as binding yarn. A quality of the material of binding yarn is preferably the same as that of ground yarn. The fineness of binding yarn is preferably 33 dtex or less. When the fineness exceeds 33 dtex, unveiling may occur in the selvage portion of the woven fabric. The fineness of binding yarn is preferably 5 to 22 dtex.

"Additional yarn" are used for the purpose of preventing selvage unraveling of the woven fabric, similarly with binding yarn, and are placed between binding yarn and warp yarn in the selvage portion of the woven fabric to assist binding yarn. However, the planetary gear is not used for additional yarn. It is preferable to use it for a plain texture having an excellent selvage-tightening property. Moreover, a material, a type, and a fineness of additional yarn are appropriately selected according to a type and a weaving density of ground yarn. Similarly with the above-described binding yarn, a monofilament having an excellent selvage-tightening performance is preferably used for additional yarn. The number of additional yarn when used is, for example, 2 to 12 pieces for each of both ends. The fineness of additional yarn is preferably 33 dtex or less. When the fineness exceeds 33 dtex, unveiling may occur in the selvage portion of the woven fabric. The fineness of additional yarn is preferably 5 to 22 dtex.

"Selvage-tightening yarn" may be used for the purpose of preventing selvage waving of the woven fabric, apart from binding yarn and additional yarn, and are placed between additional yarn and warp yarn in the selvage portion of the woven fabric. Similarly with additional yarn, no planetary gear is used. It is preferable to use it for a plain texture having an excellent selvage-tightening property. A material, a type, and a fineness of selvage-tightening yarn are appropriately selected according to a type and a weaving density of ground yarn. A multifilament having a total fineness of 80% or more based on a total fineness of ground yarn is appropriately used as selvage-tightening yarn, in order to perform weaving by applying a high tension. When the total fineness is less than 80% of ground yarn, it is not possible to perform weaving by applying a high tension, and an effect of preventing selvage waving cannot be obtained. The number of selvage-tightening yarn when used is, for example, 4 to 8 pieces for each of both ends.

In the present embodiment, at least one selvage portion of the woven fabric has weaving yarn YA and weaving yarn YB arranged in a warp yarn direction each having a different crimp ratio, wherein YA and YB are repeatedly arranged, wherein the crimp ratio CA of YA and the crimp ratio CB of YB satisfy the relation of CA≧CB×1.2. Weaving yarn YA and weaving yarn YB arranged in the warp yarn direction each having a different crimp ratio in the present embodiment are not limited to any of warp yarn (ground yarn), binding yarn, additional yarn, and selvage-tightening yarn. However, they are preferably any of warp yarn, additional yarn, and selvage-tightening yarn. It is preferable that weaving yarn YA and weaving yarn YB have the same kind of polymers or the same total fineness, but may have different polymers or total fineness.

It is preferable that weaving yarn YA and weaving yarn YB arranged in the warp yarn direction each having a different crimp ratio are repeatedly arranged on at least one selvage portion of the woven fabric. Generally, the "selvage portion" of the woven fabric means a portion occupied within 100 mm from the selvage end of the woven fabric. It is preferable that weaving yarn YA and weaving yarn YB in the present embodiment are repeatedly arranged within 25 mm from the selvage end of the woven fabric. When they are arranged within 25 mm from the selvage end, a portion which can be used for cutting as an airbag is less likely to become small due to different characteristics of the ground portion of the woven fabric and the woven fabric, so that loss can be reduced. A position and a width at which weaving yarn YA and weaving yarn YB are arranged are not particularly limited in the portion occupied within 25 mm from the selvage end. In order to effectively suppress recession of the weaving shed that occurs during weaving and occurrence of flare, it is preferable to repeatedly arrange weaving yarn YA and weaving yarn YB with a width of 5 mm or more in a portion occupied by 1 to 15 mm from the selvage end.

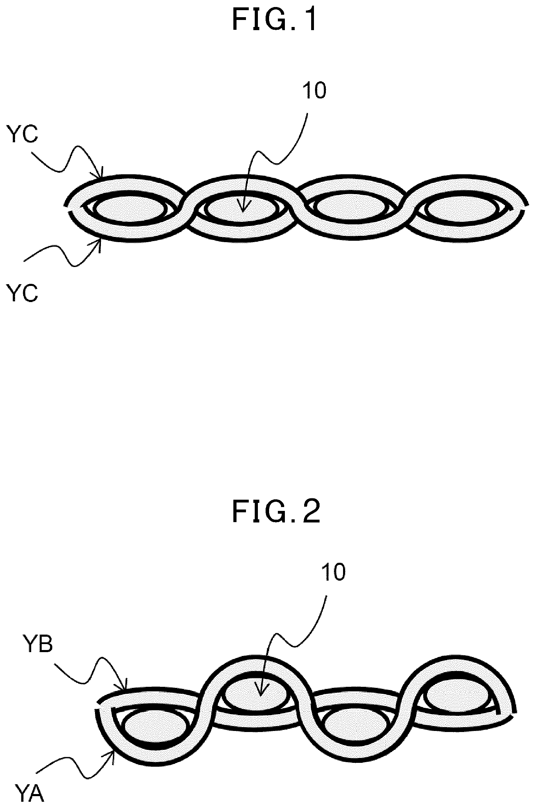

In the present embodiment, it is important that the crimp ratio CA and the crimp ratio CB of weaving yarn YA and weaving yarn YB, respectively, satisfy the relation of $CA \geqq CB \times 1.2$. Moreover, it is more preferable to satisfy the relation of $CA \geqq CB \times 2.0$, and it is further preferable to satisfy the relation of $CA \geqq CB \times 3.0$. As shown in FIG. 1, in the ground portion of the woven fabric in the present embodiment, weaving yarn YC arranged in the warp yarn direction intersecting with weft yarn 10 has the same crimp ratio as that of the adjacent weaving yarn YC, similarly with a common plain woven fabric. In this regard, as the weaving density is increased, a limit for beating up weft yarn is reached, and recession of the weaving shed during weaving becomes large. On the other hand, as shown in FIG. 2, in the selvage portion of the woven fabric in the present embodiment, as a result of making difference in crimp ratio of YA and YB, respectively, a change in a crimp structure occurs, so that weft yarn can be easily beaten up compared with a common plain woven fabric, and the weaving density can be increased. By forming such a crimp structure in the selvage portion, it becomes easier for weft yarn to be beaten up in the selvage portion than in the ground portion, and it becomes possible to effectively suppress recession of the weaving shed that occurs during weaving and occurrence of flare. By satisfying the relation of $CA \geqq CB \times 1.2$, a sufficient suppressing effect due to the change in the crimp structure can be obtained.

In the present embodiment, it is preferable that YA and YB are arranged adjacent to each other to form a plain texture. By arranging YA and YB adjacent to each other, a sufficient effect of increasing the density due to the change in the crimp structure can be exhibited. As a method of arranging YA and YB, for example, a method of arranging YA and YB alternately one by one (1:1) is preferable. By changing the ratio such as by setting the arrangement to 2:1 or 10:1, or appropriately selecting the arrangement such as by setting the arrangement to 2:2 or 8:8, an effect of suppressing recession of the weaving shed and occurrence of flare can be obtained, and it is particularly preferable that YA and YB are repeatedly arranged adjacent to each other at the ratio of 1:1, so that a sufficient suppressing effect can be easily obtained. A weave structure composed of YA and YB can obtain the effect in the present embodiment even when a rib texture is formed by, for example, aligning each of YA and YB. The weave structure composed of YA and YB is particularly preferably a plain texture having an excellent selvage-tightening property.

In claim 1, at least one of YA and YB are made of the same synthetic fiber as weaving yarn YC arranged in the warp yarn direction constituting a ground portion of the woven fabric. When YA and YB are made of, for example, yarn having characteristics of a total fineness or shrinkage significantly different from that of YC, differences in thickness and shrinkage characteristics of the ground portion and the selvage portion as the woven fabric appear, which can cause occurrence of wrinkles in the selvage portion when the woven fabric is wound as a roll, or in the subsequent scouring, setting, and coating steps. At at least one of YA and YB is made of the same synthetic fiber as YC. It is preferable that the differences in the ground portion and the selvage portion become small and wrinkles in the selvage portion become less likely to occur. Moreover, it is particularly preferable that YA, YB, and YC are all made of the same synthetic fiber.

In claim 1, a crimp ratio CC of YC satisfies a relation of $CA > CC > CB$. By satisfying the relation of $CA > CC > CB$, a ground portion having a woven fabric structure as shown in FIG. 1 and a selvage portion having a woven fabric structure as shown in FIG. 2 can be obtained, and by increasing the weaving density of weft yarn in the selvage portion rather than in the ground portion, occurrence of flare can be effectively suppressed. When the CA and the CB are smaller than the CC ($CC > CA > CB$), the crimp of weaving yarn in the selvage portion becomes smaller than that in the ground portion, and therefore the selvage portion of the woven fabric easily becomes coarse and hard, which may cause occurrence of wrinkles. Moreover, when the CA and the CB are larger than the CC ($CA > CB > CC$), a sufficient selvage-tightening property cannot be obtained, and it becomes difficult to obtain an effect of suppressing recession of the weaving shed and occurrence of flare.

[Producing method of woven fabric for airbag]

The producing method of a woven fabric for airbag according to one embodiment of the present invention (hereinafter, also simply referred to as a producing method of a woven fabric) is a method of producing a woven fabric (a woven fabric for airbag) according to the above-described embodiment. In the method of producing a woven fabric, weaving yarn YA and weaving yarn YB arranged in the warp direction each having a different crimp ratio are woven with different tensions, respectively, in at least one selvage portion of the woven fabric, and the respective tension TA and TB applied to YA and YB satisfy the relation of $TB \geqq TA \times 1.2$. Therefore, other steps shown below are illustrative and may be replaced with other known steps.

According to the producing method of a woven fabric of the present embodiment, first, warp yarn having the total fineness described above in relation to the woven fabric are warped and installed on a loom. Similarly, weft yarn are installed on the loom. The loom is not particularly limited. It is preferable to use a loom equipped with a full-width temple device when weaving a high-density woven fabric. Examples of the loom include a water jet room, an air jet room, a rapier room, and the like. Among them, a water jet room is preferable form the viewpoints that a high-speed weaving is relatively easy and that productivity is easily increased.

During weaving, a tension applied to each warp yarn constituting the ground portion of the woven fabric is preferably adjusted to a range of 0.2 to 0.5 cN/dtex. When the tension of warp yarn is within the above-described range, a woven fabric to be obtained can be improved in dimensional stability by reducing a gap between single fibers in a yarn bundle of multifilament yarn constituting the woven fabric. When the warp yarn tension is 0.2 cN/dtex or more, a binding force of weft yarn during weaving becomes sufficient, and a woven fabric in which warp yarn and weft yarn have the same density is easily obtained. On the other hand, when the warp yarn tension is 0.5 cN/dtex or less, a contact area (adhesion) between warp yarn and weft yarn can be easily adjusted in an appropriate manner in the woven fabric. Therefore, warp yarn are less likely to fluff and excellent in weaving property. A method of adjusting the warp yarn tension is not particularly limited. By way of an example, the warp yarn tension can be adjusted by a method of adjusting a warp yarn feeding speed of a loom, a method of adjusting a weaving density of weft yarn, or the like. Besides, whether or not the warp yarn tension is within the above-described ranges can be confirmed, for example, it may be confirmed by measuring a tension applied to a piece of warp yarn in a warp yarn beam and a central portion of a back roller with a tension measuring instrument during operation of a loom.

In the producing method of a woven fabric of the present embodiment, weaving yarn YA and weaving yarn YB arranged in the warp yarn direction each having a different crimp ratio are woven with different tensions, respectively, in at least one selvage portion of the woven fabric woven in the loom, wherein the respective tension TA and TB applied to YA and YB satisfy the relation of TB≧TA×1.2. Weaving yarn YA and weaving yarn YB arranged in the warp yarn direction each having a different crimp ratio are not limited to warp yarn, binding yarn, additional yarn, and selvage-tightening yarn, but it is preferable that they are any one of warp yarn, additional yarn, and selvage-tightening yarn. It is preferable that weaving yarn YA and weaving yarn YB are made of the same type of polymers or have the same total fineness, but may be made of different polymers or have different total fineness.

It is preferable that weaving yarn YA and weaving yarn YB arranged in the warp yarn direction each having a different crimp ratio are repeatedly arranged in at least one selvage portion of the woven fabric. It is preferable that weaving yarn YA and weaving yarn YB in the present embodiment are repeatedly arranged within 25 mm from the selvage end of the woven fabric. When they are repeatedly arranged within 25 mm from the selvage end, the number of weaving yarn YA and weaving yarn YB does not increase too much, and threading operation and tension management become easy. A position and a width at which weaving yarn YA and weaving yarn YB are arranged are not particularly limited in the portion occupied within 25 mm from the selvage end. In order to effectively suppress recession of the weaving shed that occurs during weaving and occurrence of flare, it is preferable to repeatedly arrange weaving yarn YA and weaving yarn YB with a width of 5 mm or more in a portion occupied by 1 to 15 mm from the selvage end.

In the producing method of a woven fabric of the present embodiment, it is important that the respective tension TA and tension TB applied to weaving yarn YA and weaving yarn YB satisfy the relation of TB≧TA×1.2. Moreover, it is more preferable to satisfy the relation of TB≧TA×1.5, and it is further preferable to satisfy the relation of TB≧TA×2.0. Generally, when the tension applied to weaving yarn during weaving is increased, the crimp ratio of weaving yarn tends to become small, while when the tension applied to weaving yarn during weaving is decreased, the crimp ratio of weaving yarn easily becomes large. By increasing a difference between the tension TA and the tension TB applied to YA and YB, the difference in crimp ratio is increased, and an effect of increasing the weaving density due to the change in the crimp structure becomes easily obtained. As a result, recession of the weaving shed that occurs during weaving and occurrence of flare can be effectively suppressed. A method of adjusting the respective tension TA and tension TB applied to weaving yarn YA and weaving yarn YB is not particularly limited. By way of an example, they can be adjusted by a method of feeding weaving yarn one by one from a paper tube or a bobbin to manage a tension with a tensor such as a spring washer, a method of preparing a beam for weaving yarn in the selvage portion separately from a warp yarn beam, a method of changing a winding tension of yarn in the selvage portion only in arranging a warp yarn beam, or the like. A range of the respective tension TA and tension TB applied to weaving yarn YA and weaving yarn YB is not particularly limited. By way of an example, it is preferable that the range of the tension TA and tension TB is adjusted in a range of 0.1 to 0.6 cN/dtex.

In the producing method of a woven fabric of the present embodiment, it is preferable to form a plain texture by arranging YA and YB adjacent to each other. By arranging YA and YB adjacent to each other, a sufficient effect of increasing the density due to the change in the crimp structure can be exhibited. As a method of arranging YA and YB, for example, a method of arranging YA and YB alternately one by one (1:1) is preferable. By changing the ratio such as by setting the arrangement to 2:1 or 10:1, or appropriately selecting the arrangement such as by setting the arrangement to 2:2 or 8:8, an effect of suppressing recession of the weaving shed and occurrence of flare can be obtained, and it is particularly preferable that YA and YB are repeatedly arranged adjacent to each other at the ratio of 1:1, so that a sufficient suppressing effect becomes easily obtained. A weave structure composed of YA and YB can obtain the effect in the present embodiment even when a rib texture is formed by, for example, aligning each of YA and YB. The weave structure composed of YA and YB is particularly preferably a plain texture having an excellent selvage-tightening property.

In the producing method of a woven fabric of the claims, at least one of YA and YB are made of the same synthetic fiber as weaving yarn YC arranged in the warp yarn direction constituting a ground portion of the woven fabric. When YA and YB are made of, for example, yarn having characteristics of a total fineness or shrinkage significantly different from that of YC, differences in thickness and shrinkage characteristics of the ground portion and the selvage portion as the woven fabric appear, which can cause occurrence of wrinkles in the selvage portion when the woven fabric is wound as a roll, or in the subsequent scouring, setting, and coating steps. At least one of YA and YB are made of the same synthetic fiber as YC. It is preferable that the differences in the ground portion and the selvage portion become small, and wrinkles in the selvage portion become less likely to occur. Moreover, it is particularly preferable that YA, YB, and YC are all made of the same synthetic fiber.

In the producing method of a woven fabric of the claims, a tension TC applied to YC satisfies the relation of TB>TC>TA. By satisfying the relation of TB>TC>TA, a ground portion having a woven fabric structure as shown in FIG. 1 and a selvage portion having a woven fabric structure as shown in FIG. 2 can be obtained. As a result, weft yarn become easily beaten up in the selvage portion rather than in the ground portion, recession of the weaving shed that occurs during weaving and occurrence of flare can be effectively suppressed. When the TB and the TA and are larger than the TC (TB>TA>TC), the crimp of weaving yarn in the selvage portion becomes smaller than that in the ground portion, and therefore the selvage portion of the woven fabric easily becomes coarse and hard, which may cause occurrence of wrinkles. In addition, an excessive tension is applied only to the selvage end during weaving, which may cause broken selvage of the woven fabric. Moreover, when TA and TB are larger than TC (TA>TB>TC), a sufficient selvage-tightening property cannot be obtained, and the effect of suppressing recession of the weaving shed and occurrence of flare becomes less likely to be obtained.

After weaving, the obtained woven fabric is dried if necessary. A drying temperature is usually 80°C or higher. When the drying temperature is 80°C or higher, the woven fabric has a small dry heat shrinkage and improves in dimensional stability. As a result, the woven fabric can be appropriately used as an airbag.

Next, the woven fabric is appropriately subjected to scouring, heat setting processes, and the like. A scouring temperature in the scouring process is preferably 20°C or higher, more preferably 25°C or higher. Moreover, the scouring temperature is preferably 80°C or lower, more preferably 70°C or lower. When the scouring temperature is 20°C or higher, the woven fabric is removed of residual strain, and single fiber filaments in multifilament yarn become easy to move, so that multifilament yarn can spread flat with respect to the woven fabric. Therefore, the woven fabric can improve in dimensional stability. Moreover, when the scouring temperature is 80°C or lower, a large shrinkage of multifilament is suppressed. As a result, the woven fabric can improve in dimensional stability.

A heat setting temperature in the heat setting is preferably a temperature at which strain remaining on the woven fabric after weaving can be removed and a large shrinkage of multifilament yarn can be suppressed, as in the case of the scouring. Specifically, the heat setting temperature is preferably 110°C or higher, more preferably 120°C or higher. Moreover, the heat setting temperature is preferably 190°C or lower. When the heat setting temperature is within the above-described ranges, a base fabric to be obtained may have an improved dimensional stability.

The woven fabric that has undergone the above-described steps may be appropriately coated with resin or elastomer. The woven fabric of the present embodiment can be provided with non-air permeability by being coated. When it is coated, a coating amount is preferably about 5 to $35g/m^2$. Resin or elastomer may be preferably one having heat resistance, cold resistance, and flame retardancy. As resin or elastomer, for example, a silicone resin, a polyamide resin, a polyurethane resin, a fluororesin, and the like are appropriately used.

The woven fabric that has undergone the above-described steps may be appropriately subjected to selvage cut. A position of the woven fabric of the present embodiment becomes easily adjusted at the time of cutting when it is subjected to selvage cut. As parts of the woven fabric that are discarded by the selvage cut, parts from the selvage end of the woven fabric to binding yarn, additional yarn, selvage-tightening yarn, and warp yarn occupied by about 25 mm from the selvage end in which a pin hole is formed by the heat setting are cut. By cutting the parts of the selvage portion that are not used as a woven fabric, the number of sheets that can be laminated in the cutting process can be increased, and a cutting efficiency can be improved.

As described above, according to the producing method of the woven fabric of the present embodiment, recession of the weaving shed in the selvage end during weaving of the woven fabric for airbag can be suppressed, and selvage waving can be reduced. In particular, when the woven fabric of the present embodiment is used as a woven fabric for airbag, a woven fabric for airbag which is excellent in process passableness and uniform coating property in the scouring, setting, and coating processes that are performed after weaving and further excellent in cutability and sewability can be provided.

One embodiment of the present invention has been described above. The present invention is not particularly limited to the above-described embodiment but is defined in the claims. Besides, the above-described embodiment mainly describes an invention having the following configurations.

A woven fabric for airbag made of synthetic fibers, wherein at least one selvage portion of the woven fabric has weaving yarn YA and weaving yarn YB arranged in a warp yarn direction each having a different crimp ratio, wherein the weaving yarn YA and the weaving yarn YB are repeatedly arranged, wherein the crimp ratio CA of the weaving yarn YA and the crimp ratio CB of the weaving yarn YB satisfy a relation of $CA \geqq CB \times 1.2$, and wherein the crimp ratio CB is smaller than the crimp ratio CA.

In the woven fabric for airbag above, at least one of the weaving yarn YA and the weaving yarn YB is made of the same synthetic fiber as weaving yarn YC arranged in the warp yarn direction constituting a ground portion of the woven fabric.

In the woven fabric for airbag above, a crimp ratio CC of the weaving yarn YC satisfies a relation of CA>CC>CB.

Preferably, in the woven fabric for airbag above, the weaving yarn YA and the weaving yarn YB are alternately arranged at a ratio of 1:1.

The invention also provides a method of producing the woven fabric for airbag of any one of the above, the method comprising repeatedly arranging weaving yarn YA and weaving yarn YB in at least one selvage portion of the woven fabric and adjusting a tension TA applied to the weaving yarn YA and a tension TB applied to the weaving yarn YB to have a relation of $TB \geqq TA \times 1.2$ for weaving.

In the method of producing the woven fabric for airbag above, the woven fabric further has weaving yarn YC arranged in a warp yarn direction constituting a ground portion, and wherein a tension TC applied to the weaving yarn YC satisfies a relation of TB>TC>TA.

EXAMPLES

Hereinafter, the present invention will be specifically described with reference to Examples. The present invention is not limited to these Examples. Besides, in the following Examples, each characteristic value was calculated by the following methods.

<Calculation method of characteristic value>

(Total fineness)

A total fineness was calculated by measurement based on corrected mass with a predetermined load of 0.045 cN/dtex by JIS L 1013: 2010 8.3.1 A Method.

(Number of filaments)

The number of filaments was calculated based on JIS L 1013: 20108.4 Method.

(Single fiber fineness)

A single fiber fineness was calculated by dividing a total fineness by the number of filaments.

(Weaving density)

Each weaving density of warp yarn and weft yarn was calculated based on JIS L 1096: 2010 8.6.1. Specifically, a sample was placed on a flat table and removed of unnatural wrinkles and tension, and the number of warp yarn and weft yarn in a section of 2.54 cm were counted for five different locations to calculate each average value.

(Thickness of base fabric)

A thickness of the base fabric was calculated based on JIS L 1096: 2010 8.4. Specifically, for each five location having a different sample, the thickness was measured under a pressure of 23.5 kPa using a thickness measuring machine after waiting for 10 seconds for the purpose of stabilization of the thickness, and then an average value was calculated.

(Basis weight)

A basis weight was calculated by collecting three test pieces of 20 cm × 20 cm, measuring each mass (g), and converting an average value measured into a mass per 1 m² (g/m²), based on JIS L 1096: 2010 8.3.2.

(Tenacity)

A tenacity was calculated by collecting five test pieces in each of a warp yarn direction and a weft yarn direction, removing yarn from both sides of the width into a width of 30 mm, and pulling the test pieces until they were cut at a gripping interval of 150 mm and a tension speed of 200 mm/min to measure a maximum load until the cutting reached with a constant speed tension type tester, and an average value in each of the warp direction and the weft direction was calculated, based on JIS K 6404-3 1999 6. Test Method B (strip method).

(Elongation at break)

Elongation at break was calculated based on the following equation (2) by collecting five test pieces in each of a warp yarn direction and a weft yarn direction, removing yarn from both sides of the width into a width of 30 mm, marking gauge lines with intervals of 100 mm at the center of these test pieces, and pulling the test pieces until they were cut at a gripping interval of 150 mm and a tension speed of 200 mm/min to read a distance between the gauge lines when the cutting reached with a constant speed tension type tester, based on JIS K 6404-3 1999 6. Test Method B (strip method):

$$(2)\ E = [(L-100)/100] \times 100$$

wherein, E indicates elongation at break (%) and L indicates a distance (mm) between gauge lines at the time of cutting.
For elongation at break, an average value in each of the warp direction and the weft direction was calculated.

(Tear strength)

Tear strength was measured by collecting five test pieces in each of a warp direction and a weft direction having a long side of 200 mm and a short side of 75 mm, making a 75 mm notch at a right angle to a direction of the short side in a center of the short side of the test piece, and tearing the test pieces until they were cut at a gripping interval of 75 mm and a tension speed of 200 mm/min with a constant speed tension type tester to measure tear loads at that time, based on JIS K 6404-4 1999 6. Test Method B (single tongue method). Three points of the measurements were selected in descending order from the maximum point excluding the first peak, from a chart recording line of the obtained tear loads, and the average value was calculated. Then, an average value in each of the warp direction and the weft direction was calculated.

(Crimp ratio)

A crimp ratio was measured based on JIS L 1096: 2010 8.7 (B Method).
A sample was placed on a flat table and removed of unnatural wrinkles and tension, and each of three positions where weaving yarn YC constituting a ground portion of a woven fabric or weaving yarn YA and weaving yarn YB each having a different crimp ratio in a selvage portion of the woven fabric was marked at a distance of 200 mm, wherein yarn in this mark were untied into disintegrated yarn, and each length of disintegrated yarn stretched straight under an initial load specified in JIS L 1013 5.1. was measured to calculate an average value, and a change in length was calculated.

(Timing of weaving shed contact)

A series of a periodic motion of a loom, in which reed receded from the foremost position, weft yarn were inserted into opened warp yarn, and reed proceeded to beat up weft yarn, in the loom, was represented by a rotation angle of the loom from 0° to 360°, and setting a state where reed is in the foremost position as a rotation angle of 0°, a rotation angle at the moment of weaving shed contact when weft yarn were beaten up by reed was measured and used as a timing of weaving shed contact. The timing of weaving shed contact was measured by applying a timing light for loom when the loom is operating and weaving a woven fabric, and measured at a ground portion at the center of the woven fabric and each selvage portion on a yarn feeding side and the opposite yarn feeding side of weft yarn, and for each selvage portion, an average value on the yarn feeding side and the opposite yarn feeding side was calculated. Evaluation on recession of the weaving shed was performed by judging a difference between the ground portion and the selvage portion as a magnitude of recession of the weaving shed, i.e., judging less than 3° as "◎", 3° or more and less than 6° as "○", 6° or more and less than 8° as "△", and 8° or more as "×".

(Presence or absence of selvage waving of woven fabric)

A woven fabric was cut into a length of 1 m and spread on a flat desk, and a height of the most elevated part of the selvage portion was measured by millimeter (rounding off an amount less than 1 mm) to calculate an average value in both selvage portions. Evaluation was performed by judging a height of selvage waving as a magnitude, i.e., judging less than 8 mm as "◎", 8 mm or more and less than 10 mm as "○", 10 mm or more and less than 12 mm as "△", and 12 mm or more as "×". In addition, a woven fabric in which broken selvage occurred was judged as "-".

<Example 1>

(Warp yarn and weft yarn)

As warp yarn and weft yarn, a non-twisted synthetic fiber filament was prepared which was made of nylon 66, had a circular cross-sectional shape, was composed of 136 single fiber filaments having a single fiber fineness of 3.5 dtex, had a total fineness of 470 dtex, had a tenacity of 8.5 cN/dtex, and had an elongation of 23.5%.

(Weaving)

Using the above-described yarn for warp yarn and weft yarn as ground portion yarn, a plain woven fabric with a weaving density of 57 yarn/2.54 cm of warp yarn and a weaving density of 57 yarn/2.54 cm of weft yarn was woven by use of a water jet loom equipped with a full-width temple. At that time, a warp yarn tension was adjusted to 0.4 cN/dtex.

At that time, binding yarn, additional yarn, and selvage-tightening yarn were used for both selvage portions of the woven fabric. As binding yarn, a nylon 66 monofilament having 22 dtex was used, wherein two pieces of yarn were fed from a planetary gear to each selvage portion. As additional yarn, a nylon 66 monofilament having 22 dtex similar to that as binding yarn was used, and 8 pieces of yarn were fed from a bobbin to each selvage portion. As selvage-tightening yarn, the same non-twisted synthetic fiber filament having 470 dtex as warp yarn constituting the ground portion was used, and 24 pieces of yarn were used for each selvage portion. In order to control a tension at the time of feeding of selvage-tightening yarn, two beams wound with 12 pieces of selvage-tightening yarn were prepared for each selvage portion, and the tension was adjusted by adjusting a feeding speed of warp yarn. As beams for feeding selvage-tightening yarn, those for low tension whose feeding tension was adjusted to 0.20 cN/dtex and those for high tension whose feeding tension was adjusted to 0.50 cN/dtex were prepared, and yarn having low tension (YA) and yarn having high tension (YB) were alternately arranged at a ratio of 1:1 in turn from a selvage end side and woven. Moreover, warp yarn (YC) constituting the ground portion were woven with a tension of 0.40 cN/dtex.

During weaving, recession of the weaving shed in the selvage portion was able to be suppressed to a small extent. YA having a crimp ratio CA of 12% and YB having a crimp ratio CB of 4% were repeatedly arranged on the selvage portion of the obtained woven fabric. In addition, a crimp ratio of YC constituting the ground portion was 10%, and the obtained woven fabric had a small selvage waving, and an ear-tightening state became uniform and better.

(Scouring and heat setting)

Next, the obtained woven fabric was scoured at 65°C in an open soaper type scouring machine, washed with hot water at 40°C, and dried at 120°C. Furthermore, using a pin stenter dryer, a widening rate was set so that the width becomes the same as that of the woven fabric after drying, and the woven fabric was heat-set at 180°C for 60 seconds under a dimensional regulation of an overfeed rate of 2%. Characteristics of the obtained woven fabric are shown in Table 1.

<Example 2>

A woven fabric for airbag was produced in the same manner as in Example 1 except that each weaving density of warp yarn and weft yarn was changed to 55 yarn/2.54 cm.

During weaving, recession of the weaving shed in the selvage portion was able to be suppressed to a small extent. YA having a crimp ratio CA of 11% and YB having a crimp ratio CB of 5% were repeatedly arranged at a ratio of 1.1 on the selvage portion of the obtained woven fabric. In addition, a crimp ratio of YC constituting the ground portion was 9%, and the obtained woven fabric had a small selvage waving, and an ear-tightening state became uniform and better. Characteristics of the obtained woven fabric are shown in Table 1.

<Example 3>

A woven fabric for airbag was produced in the same manner as in Example 1 except that each weaving density of warp yarn and weft yarn was changed to 46 yarn/2.54 cm.

During weaving, recession of the weaving shed in the selvage portion was able to be suppressed to a small extent. YA having a crimp ratio CA of 8% and YB having a crimp ratio CB of 5% were repeatedly arranged at a ratio of 1.1 on the selvage portion of the obtained woven fabric. In addition, a crimp ratio of YC constituting the ground portion was 6%, and the obtained woven fabric had a small selvage waving, and an ear-tightening state became uniform and better. Characteristics of the obtained woven fabric are shown in Table 1.

<Example 4>

As warp yarn, weft yarn, and selvage-tightening yarn, using a non-twisted synthetic fiber filament which was made of nylon 66, had a circular cross-sectional shape, was composed of 136 single fiber filaments having a single fiber fineness of 2.6 dtex, had a total fineness of 350 dtex, had a tenacity of 8.5 cN/dtex, and had an elongation of 24.5%, a woven fabric for airbag was produced in the same manner as in Example 1 except that a weaving density of warp yarn was set to 62 yarn/2.54 cm and a weaving density of weft yarn was set to 62 yarn/2.54 cm.

During weaving, recession of the weaving shed in the selvage portion was able to be suppressed to a small extent. YA having a crimp ratio CA of 10% and YB having a crimp ratio CB of 5% were repeatedly arranged at a ratio of 1.1 on the selvage portion of the obtained woven fabric. In addition, a crimp ratio of YC constituting the ground portion was 8%, and the obtained woven fabric had a small selvage waving, and an ear-tightening state became uniform and better. Characteristics of the obtained woven fabric are shown in Table 1.

<Example 5>

A woven fabric for airbag was produced in the same manner as in Example 1 except that, in a weaving step, a method of feeding selvage-tightening yarn from 16 paper tubes, respectively, using 16 non-twisted synthetic fiber filaments having 470 dtex similar to warp yarn in each of the selvage portions for selvage-tightening yarn, to adjust a tension with a spring washer type tensor, was adopted. Besides, 8 pieces of selvage-tightening yarn for low tension whose feeding tension was adjusted to 0.20 cN/dtex and 8 pieces of selvage-tightening yarn for high tension whose feeding tension was adjusted to 0.50 cN/dtex were prepared, and yarn having low tension (YA) and yarn having high tension (YB) were alternately arranged at a ratio of 1:1 in turn from a selvage end side and woven. Moreover, warp yarn (YC) constituting the ground portion were woven with a tension of 0.40 cN/dtex.

During weaving, recession of the weaving shed in the selvage portion was able to be suppressed to a small extent. YA having a crimp ratio CA of 12% and YB having a crimp ratio CB of 4% were repeatedly arranged on the selvage portion of the obtained woven fabric. In addition, a crimp ratio of YC constituting the ground portion was 10%, and the obtained woven fabric had a small selvage waving, and an ear-tightening state became uniform and better. Characteristics of the obtained woven fabric are shown in Table 1.

<Example 6> (Reference)

A woven fabric for airbag was produced in the same manner as in Example 1 except that, in a weaving step, a method of feeding selvage-tightening yarn from 8 paper tubes, respectively, using 8 non-twisted synthetic fiber filaments having 470 dtex similar to warp yarn in each of the selvage portions for selvage-tightening yarn, to adjust a tension with a spring washer type tensor, was adopted. Besides, all feeding tensions of selvage-tightening yarn were adjusted to 0.50 cN/dtex as yarn for high tension, and warp yarn fed with 0.40 cN/dtex from warp yarn beam of a loom (YA) and selvage-tightening yarn (YB) were alternately arranged at a ratio of 1:1 in turn from a selvage end side and woven. Warp yarn (YA, YC) constituting the selvage portion and the ground portion were woven with a tension of 0.40 cN/dtex.

During weaving, recession of the weaving shed in the selvage portion was able to be suppressed to a small extent. YA having a crimp ratio CA of 10% and YB having a crimp ratio CB of 4% were repeatedly arranged on the selvage portion of the obtained woven fabric. In addition, a crimp ratio of YC constituting the ground portion was 10%, and the obtained woven fabric had a small selvage waving, and an ear-tightening state became uniform and better. Characteristics of the obtained woven fabric are shown in Table 1.

<Example 7>

A woven fabric for airbag was produced in the same manner as in Example 1 except that, in a weaving step, a method of feeding selvage-tightening yarn from 18 paper tubes, respectively, using 18 non-twisted synthetic fiber filaments having 470 dtex similar to warp yarn in each of the selvage portions for selvage-tightening yarn, to adjust a tension with a spring washer type tensor, was adopted. Besides, 12 pieces of selvage-tightening yarn for low tension whose feeding tension was adjusted to 0.20 cN/dtex and 6 pieces of selvage-tightening yarn for high tension whose feeding tension was adjusted to 0.50 cN/dtex were prepared, and yarn having low tension (YA) and yarn having high tension (YB) were alternately arranged at a ratio of 2:1 in turn from a selvage end side and woven. Moreover, warp yarn (YC) constituting the ground portion were woven with a tension of 0.40 cN/dtex.

During weaving, recession of the weaving shed in the selvage portion was able to be suppressed to a small extent. YA having a crimp ratio CA of 12% and YB having a crimp ratio CB of 4% were repeatedly arranged at a ratio of 2.1 on the selvage portion of the obtained woven fabric. In addition, a crimp ratio of YC constituting the ground portion was 10%, and the obtained woven fabric had a small selvage waving, and an ear-tightening state became uniform and better. Characteristics of the obtained woven fabric are shown in Table 1.

<Comparative example 1>

A woven fabric for airbag was woven in the same manner as in Example 1 except that selvage-tightening yarn were not used. A crimp ratio of YC constituting the ground portion was 10%.

The obtained woven fabric had a large selvage waving and also a large recession of the weaving shed in the selvage portion during weaving, and fluffing occurred in the selvage portion, which made it unusable as a woven fabric for airbag. Characteristics of the obtained woven fabric are shown in Table 1.

<Comparative example 2>

A woven fabric for airbag was woven in the same manner as in Example 2 except that selvage-tightening yarn were not used. A crimp ratio of YC constituting the ground portion was 9%. The obtained woven fabric had a large selvage waving and also a large recession of the weaving shed in the selvage portion during weaving. Characteristics of the obtained woven fabric are shown in Table 1.

<Comparative example 3>

A woven fabric for airbag was woven in the same manner as in Example 3 except that selvage-tightening yarn were not used. A crimp ratio of YC constituting the ground portion was 6%. The obtained woven fabric had a large selvage waving and also a large recession of the weaving shed in the selvage portion during weaving. Characteristics of the obtained woven fabric are shown in Table 1.

<Comparative example 4>

A woven fabric for airbag was produced in the same manner as in Example 1 except that, in a weaving step, a method of feeding selvage-tightening yarn from 16 paper tubes, respectively, using 16 non-twisted synthetic fiber filaments having 470 dtex similar to warp yarn in each of the selvage portions for selvage-tightening yarn, to adjust a tension with a spring washer type tensor, was adopted. Besides, 8 pieces of selvage-tightening yarn for low tension whose feeding tension was adjusted to 0.45 cN/dtex and 8 pieces of selvage-tightening yarn for high tension whose feeding tension was adjusted to 0.50 cN/dtex were prepared, and yarn having low tension (YA) and yarn having high tension (YB) were alternately arranged at a ratio of 1:1 in turn from a selvage end side and woven. Moreover, warp yarn (YC) constituting the ground portion were woven with a tension of 0.40 cN/dtex.

During weaving, recession of the weaving shed in the selvage portion was able to be suppressed to a small extent, though broken selvage occurred during weaving. YA having a crimp ratio CA of 9% and YB having a crimp ratio CB of 8% were repeatedly arranged on the selvage portion of the obtained woven fabric. In addition, a crimp ratio of YC constituting the ground portion was 10%, and broken selvage occurred in some parts of the obtained woven fabric, which made it unusable as a woven fabric for airbag.

Table 1

| | Example | | | | | | |
|---|---|---|---|---|---|---|---|
| | 1 | 2 | 3 | 4 | 5 | 6 (ref) | 7 |
| Total fineness (dtex) | 470 | 470 | 470 | 350 | 470 | 470 | 470 |
| Number of filaments (yarn) | 136 | 136 | 136 | 136 | 136 | 136 | 136 |

(continued)

| | Example | | | | | | |
|---|---|---|---|---|---|---|---|
| | 1 | 2 | 3 | 4 | 5 | 6 (ref) | 7 |
| Single fiber fineness (dtex) | 3.46 | 3.46 | 3.46 | 2.57 | 3.46 | 3.46 | 3.46 |
| Warp density (yarn/inch) | 57 | 55 | 46 | 62 | 57 | 57 | 57 |
| Weft density (yarn/inch) | 57 | 55 | 46 | 62 | 57 | 57 | 57 |
| Thickness of woven fabric (mm) | 0.34 | 0.31 | 0.29 | 0.29 | 0.34 | 0.34 | 0.34 |
| Basis weight (g/m²) | 235 | 220 | 183 | 186 | 235 | 234 | 234 |
| Tenacity (warp/weft) (N/cm) | 798/807 | 767/750 | 670/650 | 680/690 | 792/799 | 800/803 | 796/800 |
| Elongation at break (warp/weft) (%) | 40/28 | 35/27 | 40/34 | 42/32 | 39/29 | 39/28 | 41/29 |
| Tear strength (warp/weft) (N) | 217/202 | 254/235 | 322/325 | 175/168 | 216/208 | 212/205 | 211/209 |
| Timing of weaving shed contact (selvage portion/ground portion) (°) | 332/334 | 334/335 | 341/342 | 335/336 | 332/334 | 331/334 | 329/334 |
| Evaluation on recession of weaving shed | ◎ | ◎ | ◎ | ◎ | ◎ | ○ | ○ |
| CA (%) | 12 | 11 | 8 | 10 | 12 | 10 | 12 |
| CB (%) | 4 | 5 | 5 | 5 | 4 | 4 | 4 |
| CC (%) | 10 | 9 | 6 | 8 | 10 | 10 | 10 |
| TA (cN/dtex) | 0.20 | 0.20 | 0.20 | 0.20 | 0.20 | 0.40 | 0.20 |
| TB (cN/dtex) | 0.50 | 0.50 | 0.50 | 0.50 | 0.50 | 0.50 | 0.50 |
| TC (cN/dtex)) | 0.40 | 0.40 | 0.40 | 0.40 | 0.40 | 0.40 | 0.40 |
| Selvedge waving of woven fabric | ◎ | ◎ | ◎ | ◎ | ○ | ○ | ○ |

| | Comparative example | | | |
|---|---|---|---|---|
| | 1 | 2 | 3 | 4 |
| Total fineness (dtex) | 470 | 470 | 470 | 470 |
| Number of filaments (yarn) | 136 | 136 | 136 | 136 |
| Single fiber fineness (dtex) | 3.46 | 3.46 | 3.46 | 3.46 |
| Warp density (yarn/inch) | 57 | 55 | 46 | 57 |
| Weft density (yarn/inch) | 57 | 55 | 46 | 57 |
| Thickness of woven fabric (mm) | 0.34 | 0.31 | 0.29 | 0.34 |
| Basis weight (g/m²) | 234 | 219 | 184 | 234 |
| Tenacity (warp/weft) (N/cm) | 795/799 | 750/749 | 658/660 | 789/799 |
| Elongation at break (warp/weft) (%) | 41/28 | 35/28 | 42/35 | 40/28 |
| Tear strength (warp/weft) (N) | 205/202 | 268/252 | 312/334 | 210/208 |
| Timing of weaving shed contact (selvage portion/ground portion) (°) | 325/334 | 328/335 | 340/342 | 330/334 |

(continued)

| | Comparative example | | | |
|---|---|---|---|---|
| | 1 | 2 | 3 | 4 |
| Evaluation recession of weaving shed | × | Δ | ◎ | ○ |
| CA (%) | - | - | - | 9 |
| CB (%) | - | - | - | 8 |
| CC (%) | 10 | 9 | 6 | 10 |
| TA (cN/dtex) | - | - | - | 0.45 |
| TB (cN/dtex) | - | - | - | 0.50 |
| TC (cN/dtex) | 0.40 | 0.40 | 0.40 | 0.40 |
| Selvedge waving of woven fabric | × | × | Δ | - |

As shown in Table 1, in the woven fabrics for airbag obtained in Examples 1 to 5, recession of the weaving shed in the selvage portion was able to be suppressed to a small extent, so that the obtained woven fabric had a small selvage waving, and the ear-tightening state was uniform and better.

On the other hand, in Comparative example 1, recession of the weaving shed in the selvage portion and selvage waving were large, and unveiling was observed even in the selvage-tightening state. Furthermore, fluffing occurred in the selvage portion during weaving, and thus many defects occurred in the woven fabric, which made it unusable as a woven fabric for airbag. In addition, in Comparative examples 2 and 3, recession of the weaving shed in the selvage portion and selvage waving were large.

EXPLANATION OF NUMERALS

10. Weft
YC. Weaving yarn YC arranged in warp yarn direction constituting ground portion of woven fabric
YA. Weaving yarn YA arranged in warp yarn direction constituting selvage portion of woven fabric
YB. Weaving yarn YB arranged in warp yarn direction constituting selvage portion of woven fabric

## Claims

1.   A woven fabric for airbag made of synthetic fibers,

wherein at least one selvage portion of the woven fabric has weaving yarn YA and weaving yarn YB arranged in a warp yarn direction each having a different crimp ratio, wherein at least one of the weaving yarn YA and the weaving yarn YB is made of the same synthetic fiber as weaving yarn YC arranged in the warp yarn direction constituting a ground portion of the woven fabric,
wherein the weaving yarn YA and the weaving yarn YB are repeatedly arranged,
**characterized in that** the crimp ratio CA of the weaving yarn YA and the crimp ratio CB of the weaving yarn YB satisfy a relation of $CA \geqq CB \times 1.2$,
wherein the crimp ratio CB is smaller than the crimp ratio CA,
and **in that** a crimp ratio CC of the weaving yarn YC satisfies a relation of CA>CC>CB,
wherein the crimp ratio is measured based on JIS L 1096: 2010 8.7 (B Method).

2.   The woven fabric for airbag of claim 1, wherein the weaving yarn YA and the weaving yarn YB are alternately arranged at a ratio of 1:1.

3.   The woven fabric for airbag of claim 1 or claim 2, wherein the crimp ratio CA of the weaving yarn YA and the crimp ratio CB of the weaving yarn YB satisfy a relation of $CA \geqq CB \times 2.0$.

4. The woven fabric for airbag of any one of claims 1-3, wherein YA, YB, and YC are all made of the same synthetic fiber.

5. A method of producing the woven fabric for airbag of any one of claims 1 to 4, the method comprising

repeatedly arranging weaving yarn YA and weaving yarn YB in at least one selvage portion of the woven fabric, wherein the woven fabric further has weaving yarn YC arranged in a warp yarn direction constituting a ground portion, **characterized in that** the method comprises adjusting a tension TA applied to the weaving yarn YA and a tension TB applied to the weaving yarn YB to have a relation of $TB \geqq TA \times 1.2$ for weaving, and **in that** a tension TC applied to the weaving yarn YC satisfies a relation of TB>TC>TA, wherein the tension is measured by the method of the description.

**Patentansprüche**

1. Gewebe für einen Airbag, das aus Synthetikfasern besteht,

wobei zumindest ein Webkantenabschnitt des Gewebes einen Webgarn YA und einen Webgarn YB aufweist, die in einer Kettgarnrichtung angeordnet sind und jeweils ein unterschiedliches Kräuselungsverhältnis aufweisen, wobei zumindest eines aus dem Webgarn YA und dem Webgarn YB aus der gleichen Synthetikfaser wie ein Webgarn YC besteht, das in Kettgarnrichtung angeordnet ist und einen Grundabschnitt des Gewebes bildet, wobei das Webgarn YA und das Webgarn YB wiederholt aneinandergereiht sind, **dadurch gekennzeichnet, dass** das Kräuselungsverhältnis CA des Webgarns YA und das Kräuselungsverhältnis CB des Webgarns YB die Beziehung $CA \geqq CB \times 1{,}2$ erfüllen, wobei das Kräuselungsverhältnis CB kleiner ist als das Kräuselungsverhältnis CA, und dass das Kräuselungsverhältnis CC des Webgarns YC die Beziehung CA>CC>CB erfüllt, wobei das Kräuselungsverhältnis gemäß JIS L 1096:2010 8.7 (Verfahren B) gemessen wird.

2. Gewebe für einen Airbag nach Anspruch 1, wobei das Gewebegarn YA und das Gewebegarn YB abwechselnd im Verhältnis 1:1 angeordnet sind.

3. Gewebe für einen Airbag nach Anspruch 1 oder 2, wobei das Kräuselungsverhältnis CA des Webgarns YA und das Kräuselungsverhältnis CB des Webgarns YB die Beziehung $CA \geqq CB \times 2{,}0$ erfüllen.

4. Gewebe für einen Airbag nach einem der Ansprüche 1 bis 3, wobei YA, YB und YC alle aus der gleichen Synthetikfaser bestehen.

5. Verfahren zur Herstellung eines Gewebes für einen Airbag nach einem der Ansprüche 1 bis 4, wobei das Verfahren Folgendes umfasst:

wiederholtes Aneinanderreihen eines Gewebegarns YA und eines Gewebegarns YB in zumindest einem Webkantenabschnitt des Gewebes, wobei das Gewebe ferner einen Gewebegarn YC aufweist, das in einer Kettgarnrichtung angeordnet ist und einen Grundabschnitt bildet, **dadurch gekennzeichnet, dass** das Verfahren das Einstellen einer Zugspannung TA, die auf das Webgarn YA beaufschlagt wird, und einer Zugspannung TB, die auf das Webgarn YB beaufschlagt wird, umfasst, um die Beziehung $TB \geqq TA \times 1{,}2$ zum Weben aufzuweisen, und dass eine Zugspannung TC, die auf das Gewebegarn YC beaufschlagt wird, die Beziehung TB>TC>TA erfüllt, wobei die Zugspannung durch das Verfahren der Beschreibung gemessen wird.

**Revendications**

1. Tissu de coussin de sécurité gonflable réalisé en fibres synthétiques,

dans lequel au moins une partie de lisière du tissu tissé présente un fil de tissage YA et un fil de tissage YB agencé dans une direction de fil de chaîne présentant chacun un taux de frisure différent, dans lequel au moins un parmi le fil de tissage YA et le fil de tissage YB est réalisé en la même fibre synthétique que le fil de tissage YC agencé dans la direction de fil de chaîne constituant une partie de fond du tissu tissé,
dans lequel le fil de tissage YA et le fil de tissage YB sont agencés de manière répétée,
**caractérisé en ce que** le taux de frisure CA du fil de tissage YA et le taux de frisure CB du fil de tissage YB satisfont une relation CA $\geqq$ CB $\times$ 1,2,
dans lequel le taux de frisure CB est inférieur au taux de frisure CA,
et **en ce qu'**un taux de frisure CC du fil de tissage YC satisfait une relation CA > CC > CB,
dans lequel le taux de frisure est mesuré sur la base de JIS L 1096 : 2010 8,7 (Procédé B).

2. Tissu de coussin de sécurité gonflable selon la revendication 1, dans lequel le fil de tissage YA et le fil de tissage YB sont agencés alternativement selon un rapport de 1:1.

3. Tissu de coussin de sécurité gonflable selon la revendication 1 ou la revendication 2, dans lequel le taux de frisure CA du fil de tissage YA et le taux de frisure CB du fil de tissage YB satisfont une relation CA $\geqq$ CB $\times$ 2,0.

4. Tissu de coussin de sécurité gonflable selon l'une quelconque des revendications 1 à 3, dans lequel YA, YB et YC sont tous fabriqués à partir de la même fibre synthétique.

5. Procédé de production du tissu tissé de coussin gonflable de sécurité selon l'une quelconque des revendications 1 à 4, le procédé comprenant l'étape consistant à

disposer de manière répétée le fil de tissage YA et le fil de tissage YB dans au moins une partie de lisière du tissu tissé, dans lequel le tissu tissé présente en outre un fil de tissage YC agencé dans une direction de fil de chaîne constituant une partie de fond, **caractérisé en ce que** le procédé comprend un ajustement d'une tension TA appliquée au fil de tissage YA et d'une tension TB appliquée au fil de tissage YB pour avoir une relation TB $\geqq$ TA $\times$ 1,2 pour le tissage,
et **en ce qu'**une tension TC appliquée au fil de tissage YC satisfait une relation TB > TC > TA,
dans lequel la tension est mesurée par l'intermédiaire du procédé de la description.

## FIG. 1

## FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014051049 A
- JP 2001355143 A
- JP 2000064148 A
- JP H10236253 A
- US 20090194188 A1